# EUROPÄISCHE PATENTANMELDUNG

(11) **EP 0 638 616 A1**
(43) Veröffentlichungstag der Anmeldung: **15.02.1995**
(21) Anmeldenummer: 94810457.5
(22) Anmeldetag: 04.08.1994
(51) Int. Cl.: C09B 69/02, C08K 5/34

(54) **Pigmentsalze**

(30) Priorität: 13.08.1993 CH 2411/93
(71) Anmelder: CIBA-GEIGY AG, CH-4002 Basel (CH)
(72) Erfinder: Chassot, Laurent, Dr., CH-1724 Praroman (CH)

(57) **Zusammenfassung**

Pigmentsalze aus
a) einem mindestens eine saure Gruppe -SO₃H, -COOH oder -PO(OH)₂ enthaltenden organischen Farbstoff ausgewählt aus der Gruppe bestehend aus Azofarbstoffe, Chinacridone, Diketopyrrolopyrrole, Phthalocyanine, Indanthrone, Flavanthrone, Pyranthrone, Anthrachinone, Perylene, Dioxazine, Perinone, Thioindigo, Isoindoline und Isoindolinone und
b) einer Nitroxylverbindung bestehend aus mindestens einem unsubstituierten oder substituierten 5-, 6- oder 7-gliedrigen Heterocyclus enthaltend eine zweiwertige Gruppe der Formel 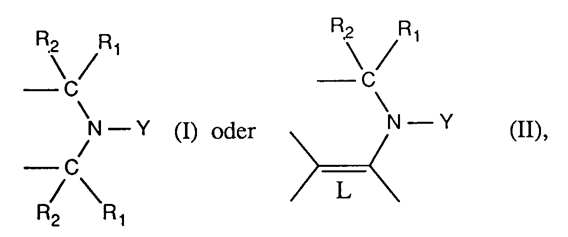 worin,
   R₁ und R₂ unabhängig voneinander Methyl, Ethyl oder Phenyl bedeuten oder zusammen einen 4-12 gliedrigen aliphatischen Ring bilden,
   L einen aromatischen Rest darstellt
   und Y O·, OH oder OR bedeutet, worin R C₅-C₆-Cycloalkyl oder C₄-C₁₀-Alkyl ist, wobei die Salzbildung zwischen den sauren Gruppen des Farbstoffs und den Nitroxylgruppen erfolgt.

Diese Pigmentsalze zeichnen sich durch hervorragende Licht- und Wetterbeständigkeit aus.

## Beschreibung

Die vorliegende Erfindung betrifft unlösliche Salze aus einem mindestens eine saure Gruppe enthaltenden Farbstoff und einer basischen mindestens eine sterisch gehinderte Nitroxylgruppe enthaltenden Verbindung und deren Verwendung zum Pigmentieren von hochmolkularem organischem Material.

Aus der GB-A 2 236 536 sind unlösliche Salze von sauren Farbstoffen mit basischen Verbindungen, die mindestens einen Rest mit einem sterisch gehinderten Amin enthalten, bekannt, die sich sehr gut zum Einfärben von lösungsmittelfreien und lösungsmittelhaltigen Kuntsstoffen eignen. Je nach Anwendung genügen diese Salze aber nicht immer den heutigen Anforderungen der Technik.

Gemäss vorliegender Erfindung ist nun gefunden worden, dass durch Verwendung einer basischen Verbindung, die mindestens eine sterisch gehinderte Nitroxylgruppe enthält, die Pigmenteigenschaften, insbesondere Licht- und Wetterbeständigkeit überraschend verbessert werden.

Die vorliegende Erfindung betrifft demnach Pigmentsalze aus
a) einem mindestens eine saure Gruppe -SO₃H, -COOH oder -PO(OH)₂ enthaltenden organischen Farbstoff ausgewählt aus der Gruppe bestehend aus Azofarbstoffe, Chinacridone, Diketopyrrolopyrrole, Phthalocyanine, Indanthrone, Flavanthrone, Pyranthrone, Anthrachinone, Perylene, Dioxazine, Perinone, Thioindigo, Isoindoline und Isoindolinone und
b) einer Nitroxylverbindung bestehend aus mindestens einem unsubstituierten oder substituierten 5-, 6- oder 7-gliedrigen Heterocyclus enthaltend eine zweiwertige Gruppe der Formel 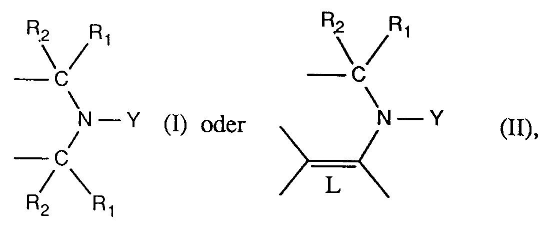 worin,
   R₁ und R₂ unabhängig voneinander Methyl, Ethyl oder Phenyl bedeuten oder zusammen einen 4-12 gliedrigen aliphatischen Ring bilden,
   L einen aromatischen Rest darstellt
   und Y O·, OH oder OR bedeutet, worin R C₅-C₆-Cycloalkyl oder C₄-C₁₀-Alkyl ist, wobei die Salzbildung zwischen den sauren Gruppen des Farbstoffs und den Nitroxylgruppen erfolgt.

Besonders geeignete saure Farbstoffe sind jene der Isoindolin-, Isoindolinon-, Bisazo- und insbesondere der Monoazo-, Diketopyrrolopyrrol-, Chinacridon-, Phthalocyanin-, Anthrachinon- und Perylenreihe. Von besonderem Interesse sind die sulfosauren Farbstoffe. Es handelt sich dabei um allgemein bekannte Produkte, wie sie z.B. in US 3 386 843, US 4 863 522, US 4 692 189, US 4 992 495 und US 4 791 204 als freie Säuren oder als Metall- oder Ammoniumsalze beschrieben sind.

Bevorzugt werden Farbstoffe der Formel 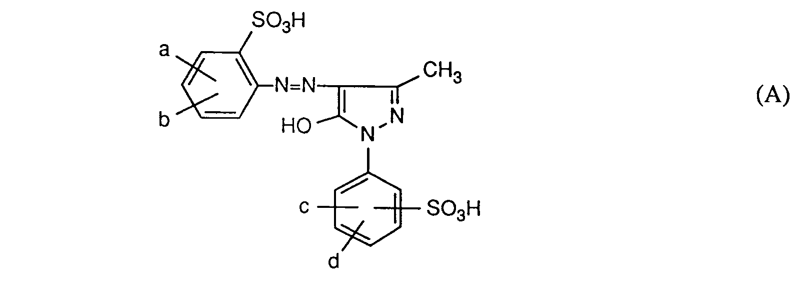
oder der Formel 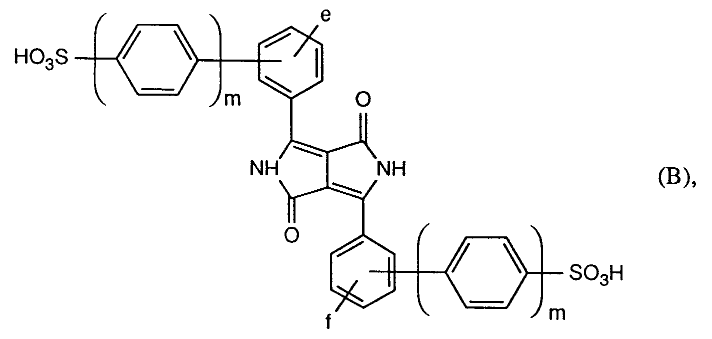
worin a und b unabhängig voneinander Cl, Br, CH₃ oder OCH₃, c und d unabhängig voneinander H, Cl, Br, CH₃ oder OCH₃, e und f unabhängig voneinander H, Cl, CH₃ oder CN und m Null oder 1 bedeuten.

Bei den Nitroxylverbindungen handelt es sich ebenfalls um bekannte Verbindungen. Sie werden z.B. in folgenden Publikationen offenbart:
- Chemical Reviews, 1978, Vol. 78, No. 1, 37-64. (J.F.W. Keana, Newer Aspects of the Synthesis and Chemistry of Nitroxide Spin Labels), insbesondere die Seiten 40-47;
- Imidazoline Nitroxides, 1988, Vol. 1, 5-23 (L.B. Volodarsky, I.A. Grigorev, Synthesis of Heterocyclic Nitroxides);
- Tetrahedron Letters, Vol. 29, No. 37, 4677-4680, 1988 (R.W. Murray, M. Singh, A Convenient High Yield Synthesis of Nitroxides);
- J. Org. Chem, 1991, Vol. 56, 6110-6114 (Z. Ma, J.M.Bobbitt, Organic Oxoammonium Salts), insbesondere die Beispiele auf Seite 6114;
- Journal of Polymer Science (Polymer Chemistiry Edition), 1974, Vol. 12, 1407-1420 (T. Kurosaki et al., Polymers Having Stable Radicals), insbesondere die Beispiele S.S. 1417-1419;
- US-Patent 3 536 722, Formel I und insbesondere die Beispiele 1-6;
- US-Patent 3 936 456, Spalten 1 und 2 und insbesondere die Beispiele 7 und 8;
- US-Patent 3 971 757, Formel I und Beispiel 12;
- US-Patent 3 966 711, Formel I und Beispiel 7;
- US-Patent 4 131 599, Spalte 1 und 2 und Beispiel 5;
- US-Patent 5 001 233, insbesondere Beispiel 1.

Allenfalls neue verwendbare Nitroxylverbindungen der obengenannten Definition können in Analogie zu allgemein bekannten Methoden hergestellt werden.

Die Nitroxylverbindung wird vorzugsweise in der Menge eingesetzt, dass die basischen Nitroxylgruppen die sauren Gruppen des Farbstoffs neutralisieren.

R₁ und R₂ sind bevorzugt Methyl.

Von besonderem Interesse sind Pigmentsalze mit einer Nitroxylverbindung der Formel 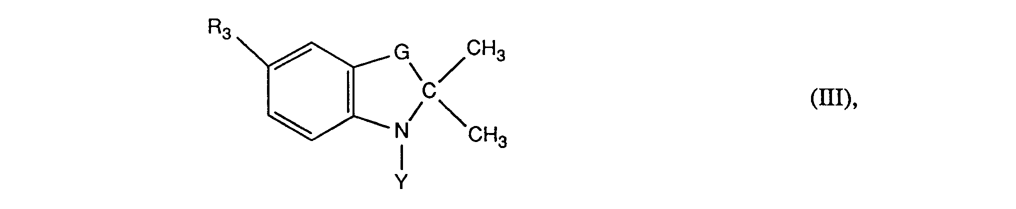 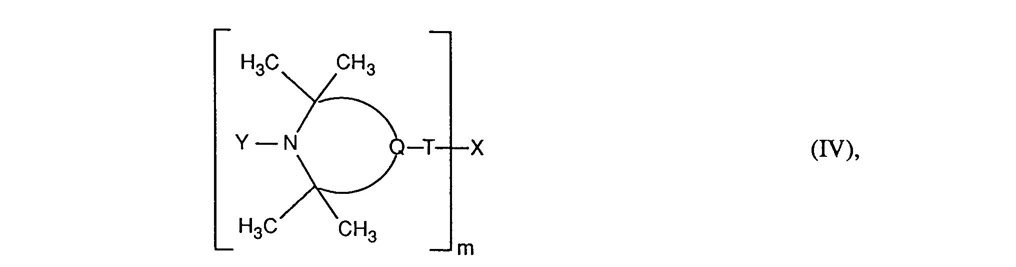 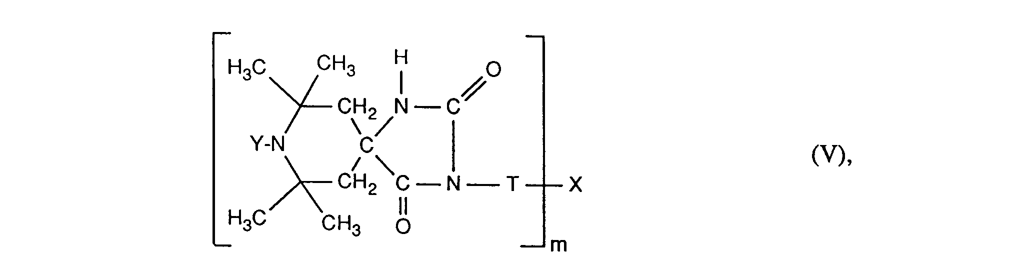 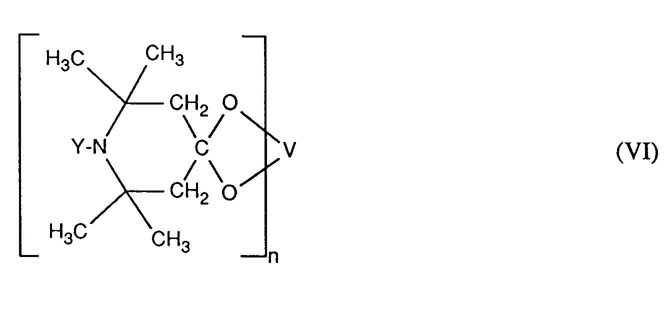
oder 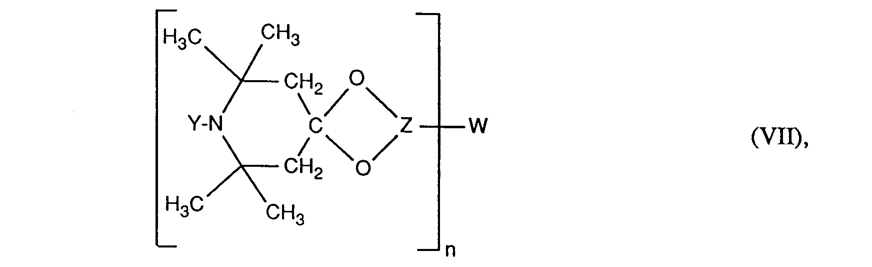
worin
R₃ C₁-C₁₈-Alkyl oder C₁-C₁₈-Alkoxy ist,
G eine zweiwertige Gruppe der Formel -CR₄=CH- oder -CHR₄-CH₂- bedeutet und
R₄ C₁-C₁₈-Alkyl ist,
Q eine Gruppe der Formel 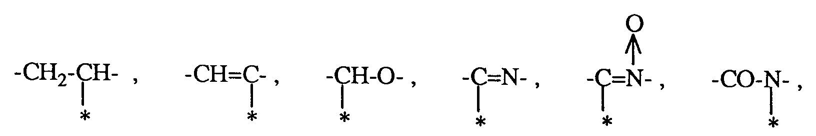 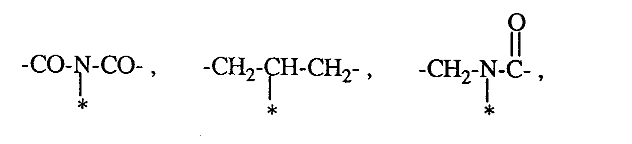 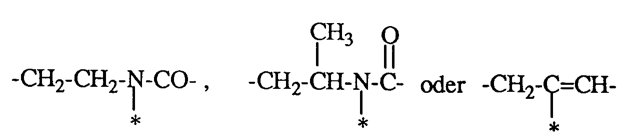
darstellt, worin die mit * bezeichnete Bindung die zu T führende Bindung bedeutet,
T eine direkte Bindung oder eine Gruppe der Formel 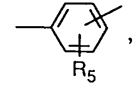
worin R₅ Wasserstoff, Halogen oder C₁-C₄-Alkyl bedeutet, oder -(CH₂)ᵣ-, worin r 1 oder 2 ist, bedeutet,
m die Zahl 1,2,3,4 oder 6 ist,
X, bei m = 1, Wasserstoff, C₁-C₁₈-Alkyl, unsubstituiertes oder durch C₁-C₄-Alkyl, C₁-C₄-Alkoxy, Phenyl oder Halogen substituiertes Phenyl oder, unter der Bedingung, dass T, wenn an ein N-Atom gebunden, keine direkte Bindung bedeutet, eine Gruppe der Formel -OCO-NR₆R₇, -OSO₂-NR₆R₇, -OCO-R₇, -COOR₇, -CONR₆R₇, -NR₆-COR₇, -NR₆-CONR₆R₇, -OR₇, -NR₆R₇ oder 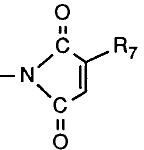
oder 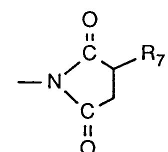
ist, worin R₆ Wasserstoff oder C₁-C₁₈-Alkyl bedeutet, R₇ C₁-C₁₈-Alkyl, C₂-C₁₂-Alkenyl, C₅-C₁₂-Cycloalkyl, unsubstituiertes oder durch C₁-C₄-Alkyl, C₁-C₄-Alkoxy, Halogen, Phenyl oder Nitro substituiertes Phenyl oder Naphthyl oder eine Gruppe -(CH₂)ₛ-CHR₈R₉ ist, s Null, 1, 2 oder 3, R₈ Wasserstoff, Methyl oder Phenyl und R₉ -OH, Halogen, eine Gruppe -COOCH₃ oder -COOC₂H₅ bedeuten,
bei m = 2, eine Gruppe der Formel (CH₂ 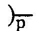 oder, unter der Bedingung, dass T, wenn an ein N-Atom gebunden, keine direkte Bindung bedeutet, eine Gruppe der Formel -O-(CH₂)ₚ-O-, -NR₆-(CH₂)ₚ-NR₆-, -OCO-F-COO-, -NR₆-CO-F-CO-NR₆-, -OCO-NH-F-NH-COO- oder -NR₆-CONH-F-NHCO-NR₆- ist, worin F -(CH₂)ₚ-, 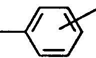
oder 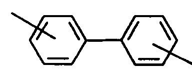
darstellt, und p eine Zahl zwischen 2 und 10 bedeutet,
bei m = 3, eine Gruppe 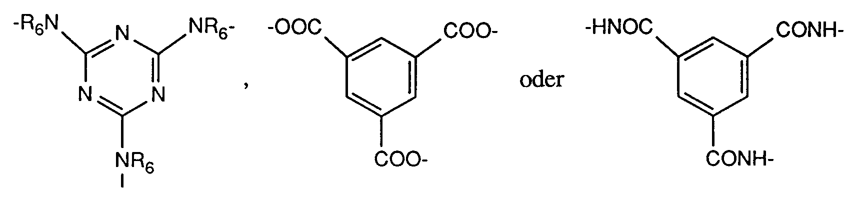
bei m = 4, eine Gruppe 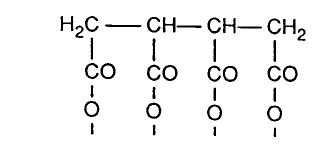
und
bei m = 6, eine Gruppe 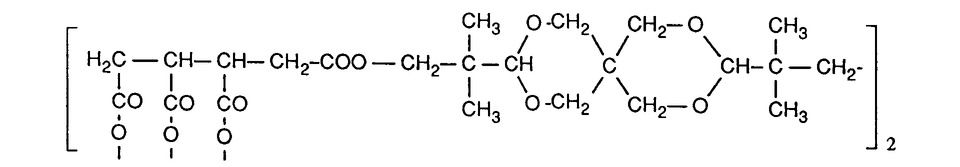
bedeutet,
- n: die Zahl 1 oder 2 ist,
- V,: bei n = 1, C₂-C₈-Alkylen oder Hydroxyalkylen oder C₄-C₂₂-Acyloxyalkylen, und bei n = 2 die Gruppe (-CH₂)₂C(CH₂-)₂ oder 〉C〈 bedeutet, und
- Z: eine Gruppe der Formel

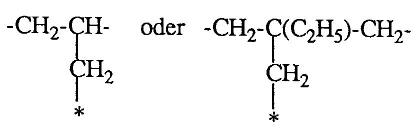

ist, worin die mit * bezeichnete Bindung die zu W führende Bindung darstellt,
- W,: bei n = 1, eine Gruppe -OCOR₁₀ bedeutet, worin R₁₀ C₁-C₁₈-Alkyl, unsubstituiertes oder durch C₁-C₄-Alkyl, C₁-C₄-Alkoxy oder Halogen substituiertes Phenyl oder Naphthyl ist,
bei n = 2, eine Gruppe der Formel -OCO-(CH₂)ₚ-COO- oder 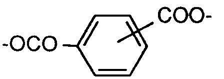 ist, und
- Y: O·, OH oder OR, worin R die oben angegebene Bedeutung hat, bedeutet.

Bedeuten etwaige Substituenten C₁-C₄-Alkyl, so handelt es sich z.B. um Methyl, Ethyl, n-Propyl, Isopropyl, n-Butyl, sec.-Butyl, tert.-Butyl, und C₁-C₁₈-Alkyl zusätzlich z.B. n-Amyl, tert.-Amyl, Hexyl, Heptyl, Octyl, 2-Ethylhexyl, Decyl, Dodecyl, Tetradecyl, Hexadecyl oder Octadecyl;
R als C₅-C₆-Cycloalkyl bedeutet z.B. Cyclopentyl und bevorzugt Cyclohexyl. R als C₄-C₁₀-Alkyl bedeutet z.B. tert.-Butyl, n-Amyl, n-Hexyl, n-Decyl und bevorzugt n-Octyl.

C₁-C₄-Alkoxy bedeutet, z.B. Methoxy, Ethoxy, n-Propoxy, Isopropoxy, Butyloxy und C₁-C₁₈-Alkoxy zusätzlich z.B. Hexyloxy, Decyloxy, Dodecyloxy, Hexadecyloxy oder Octadecyloxy;
Halogen steht z.B. für Jod, Fluor, insbesondere Brom und bevorzugt Chlor;
bedeuten etwaige Substituenten C₂-C₁₂-Alkenyl, so handelt es sich z.B. um Vinyl, Allyl, Methallyl, 2-Butenyl, 2-Hexenyl, 3-Hexenyl, 2-Octenyl oder 2-Dodecenyl.

Stellt R₇ C₅-C₁₂-Cycloalkyl dar, dann handelt es sich beispielsweise um Cyclopentyl, Cycloheptyl, Cyclooctyl, Cyclononyl, Cyclododecyl und bevorzugt um Cyclohexyl.

V bedeutet als C₂-C₈-Alkylen oder -Hydroxyalkylen z.B. Ethylen, 1-Methyl-ethylen, Propylen, 2-Ethyl-propylen oder 2-Ethyl-2-hydroxymethylpropylen und als C₄-C₂₂-Acyloxyalkylen z.B. 2-Ethyl-2-acetoxymethylpropylen.

Von ganz besonderem Interesse sind Pigmentsalze mit einer Nitroxylverbindung der Formel IV, V oder VI mit der oben angegebenen Bedeutung.

Besonders geeignet sind Nitroxylverbindungen der Formel 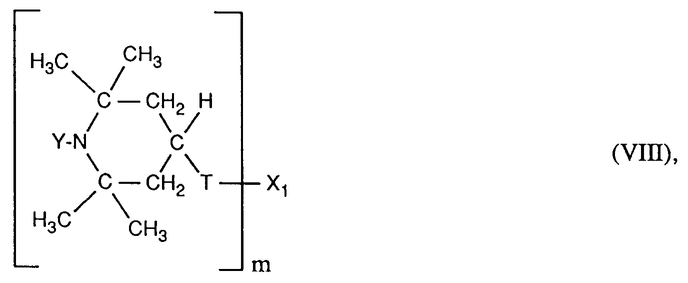 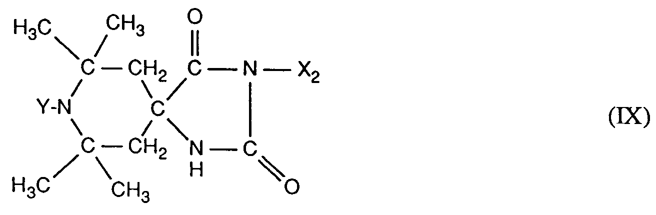
oder 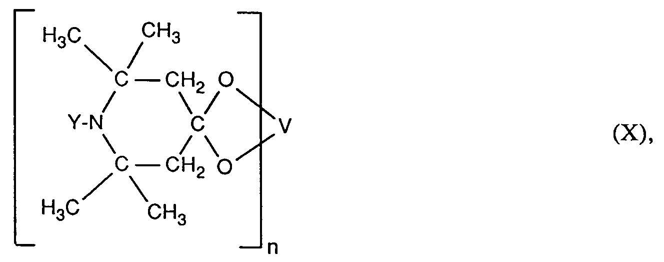
worin
- T: eine direkte Bindung bedeutet,
- m: 1,2 oder 3 ist,
- X₁,: bei m = 1, C₁-C₁₈-Alkyl, -OCO-R₇, -NR₆-COR₇ oder 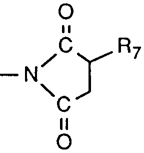 ist, worin R₆ Wasserstoff oder C₁-C₁₈-Alkyl ist und R₇ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
bei m = 2, eine Gruppe -OCO-(CH₂)ₚ-OCO- oder -NR₆CO-(CH₂)ₚ,-CONR₁₅-, worin p eine Zahl zwischen 2 und 8 ist, 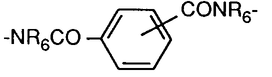 oder 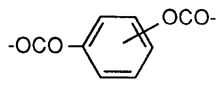 ist und
bei m = 3, eine Gruppe

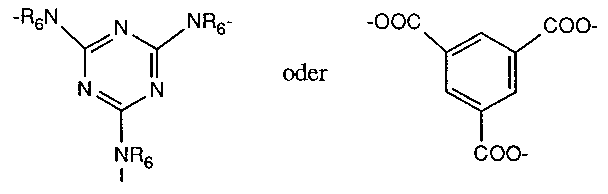

bedeutet,
- X₂: C₁-C₁₈-Alkyl ist,
- n: die Zahl 2,
- V: die Gruppe (-CH₂)₂C(CH₂-)₂ oder 〉C〈 bedeutet und
- Y: OH oder OC₈H₁₇ ist.

Bevorzugt werden Nitroxylverbindungen der Formel VIII worin
T eine direkte Bindung bedeutet, m 2 ist und X₁ eine Gruppe 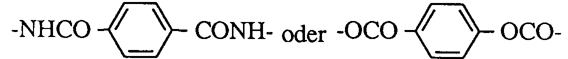
bedeutet.

Wie oben bereits erwähnt werden die Pigmentsalze durch das Vorhandensein der Nitroxylverbindung gegen die Einwirkung von Licht und Wetter, die sowohl zur Verblassung, gegebenenfalls aber auch zum Nachdunkeln der Ausfärbungen führen kann, stabilisiert. Die erfindungsgemässe Salzbildung mit der Nitroxylverbindung hat sich in beiden Fällen als wirksam, d.h. als stabilisierend, erwiesen.

Die erfindungsgemässen Salze werden nach allgemein üblichen Methoden, z.B. durch Vermischen des gelösten sauren Farbstoffs mit einer wässrigen Dispersion der Nitroxylverbindung, hergestellt.

Die erfindungsgemässen Pigmentsalze eignen sich ausgezeichnet als Pigmente zum Färben von hochmolekularem organischem Material, insbesondere, wenn hohe Anforderungen an die Licht- und Wetterbeständigkeit gestellt werden.

Hochmolekulare organiche Materialien, die mit den erfindungsgemässen Pigmentsalzen pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, ABS, Polyphenylenoxide, Gummi, Casein, Silikon und Silikonharze, einzeln oder in Mischungen.

Besonders geeignet sind die erfindungsgemässen Pigmentsalze zum Einfärben von Polyvinylchlorid und Polyolefinen, wie Polyethylen und Polypropylen, sowie zum Pigmentieren von Lacken, Anstrichstoffen und Druckfarben.

Die erfindungsgemässen Pigmentsalze eignen sich aber vorzugsweise zum Färben von Polyethylen, Polypropylen, Polyvinylchlorid, Polystyrol, Polyacrylate, Polyesteralkyd- und Polyurethanlacke.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentsalze als Toner oder in Form von Präparaten einzusetzen.

Bezogen auf das zu pigmentierende hochmolekulare organische Material kann man die erfindungsgemässen Pigmentsalze n einer Menge von 0,01 bis 40 Gew.%, vorzugsweise von 0,1 bis 10 Gew.%, einsetzen.

Die Pigmentierung der hochmolekularen organischen Substanzen mit den erfindungsgemässen Pigmentsalzen erfolgt beispielsweise derart, dass man eine solches Pigmentsalz gegebenenfalls in Form eines Masterbatches, diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzgiessen, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Pigmentsalze in die Polymeren eingearbeitet werden. Zwecks Erzielung verschiedener Farbtöne ist es ferner möglich, den hochmolekularen organischen Stoffen neben den erfindungsgemässen Pigmentsalzen noch Füllstoffe beziehungsweise andere farbgebende Bestandteile, wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemässen Pigmentsalze gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert beziehungsweise gelöst.

In Färbungen, beispielsweise von Lacken, Polyvinylchlorid oder Polyolefinen, zeichnen sich die erfindungsgemässen Pigmentsalze durch gute allgemeine Pigmenteigenschaften, wie gute Dispergierbarkeit, hohe Farbstärke und Reinheit, gute Migrations-, Hitze- und insbesondere Licht- und Wetterbeständigkeit aus.

Die nachfolgenden Beispiele erläutern die Erfindung. Darin bedeuten Teile Gewichtsteile, sofern nichts anderes angegeben ist.

### Beispiel 1a):

4,7 Teile 3-Chlor-4-methyl-6-sulfosäureanilin werden in ca. 11 Teilen 15 %iger Salzsäure gelöst. Die Lösung wird auf 0 bis 4°C abgekühlt, mit 6 Teilen 4N NaNO₂-Lösung diazotiert und der Nitritüberschuss mit Aminosulfosäure zerstört. Zur erhaltenen Diazoniumsalzlösung fügt man bei 0 bis 4°C langsam unter Rühren eine Lösung von 3,48 Teilen 1-Phenyl-3-methyl-5-pyrazolon in 20 Teilen Wasser und 2,2 Teilen 30 %iger NaOH hinzu und rührt bei Raumtemperatur noch 18 Stunden weiter. Danach erwärmt man in 2 Stunden unter Rühren auf 60°C, filtriert, wäscht den Rückstand mit Wasser und trocknet im Vakuumtrockenschrank. Die erhaltene Trockensubstanz wird dann in Wasser aufgenommen und der pH wird mit verdünnter Natronlauge auf 8,5 eingestellt.

### b) 9,9 Teile der Verbindung der Formel

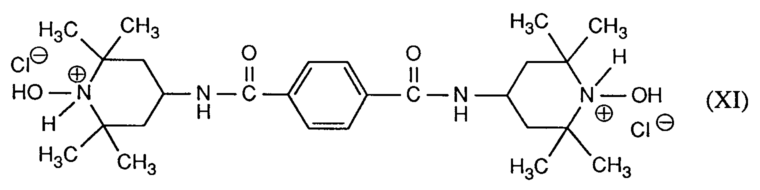

werden in 56 Teilen Wasser unter Rühren während 30 Minuten dispergiert und in die gemäss a) erhaltene Suspension eingetragen, 3 Stunden auf 60°C erhitzt und dann auf Raumtemperatur abgekühlt. Der Rückstand wird abfiltriert, mit Wasser gewaschen und getrocknet.
Das erhaltene Pigmentsalz wird wie folgt in einen Alkyd-Melamin-Einbrennlack eingearbeitet.
0,4 g Pigmentsalz 7,6 g TiO₂, 9 ml Methylisobutylketon und 30 g Einbrennlack bestehend aus 66,5 Teilen Alkydharz ® ALKYDAL F27 (Bayer AG), 24,4 Teilen Melaminharz ®MAPRENAL TTK (Hoechst AG), 2,1 Teilen Xylol, 4,0 Teilen Ethylenglykol und 1,0 Teil Silikonöl (1 %ig in Xylol) werden nach üblichen Methoden vermischt. Der erhaltene Farblack wird auf Aluminiumbleche ausgezogen und 30 Minuten bei 130°C eingebrannt.
Die Wetterbeständigkeit der Ausfärbung, bestimmt gemäss WOM-Test nach DIN 53387 nach 500 Stunden Bewitterung, ist ausgezeichnet.

### Beispiel 2:

Beispiel 1 wird wiederholt mit der einzigen Ausnahme, dass die Nitroxylverbindung in 56 Teilen Wasser und 3,2 Teilen 33 %iger Salzsäure dispergiert wird.

### Beispiel 3:

Beispiel 1 wird wiederholt mit der einzigen Ausnahme, dass anstelle von 1-Phenyl-3-methyl-5-pyrazolon die äquivalente Menge 1-(3-Sulfosäurephenyl)-3-methyl-5-pyrazolon und 20 Teile Nitroxylverbindung verwendet werden.

### Beispiel 4:

Beispiel 1 wird wiederholt mit der einzigen Ausnahme, dass anstelle von 3-Chlor-4-methyl-6-sulfonsäureanilin die äquivalente Menge 3,4-Dichlor-6-sulfonsäureanilin verwendet wird.

### Beispiel 5:

Beispiel 4 wird wiederholt mit der einzigen Ausnahme, dass anstelle von 1-Phenyl-3-methyl-5-pyrazolon die qäuivalente Menge 1-(3-Sulfosäurephenyl)-3-methyl-5-pyrazolon und 20 Teile Nitroxylverbindung verwendet werden.

### Beispiel 6:

10 Teile der Verbindung der Formel XI (vgl. Beispiel 1b) werden in 56 Teilen Wasser unter Rühren während 30 Minuten dispergiert und in eine Suspension von 10 Teilen der Verbindung der Formel 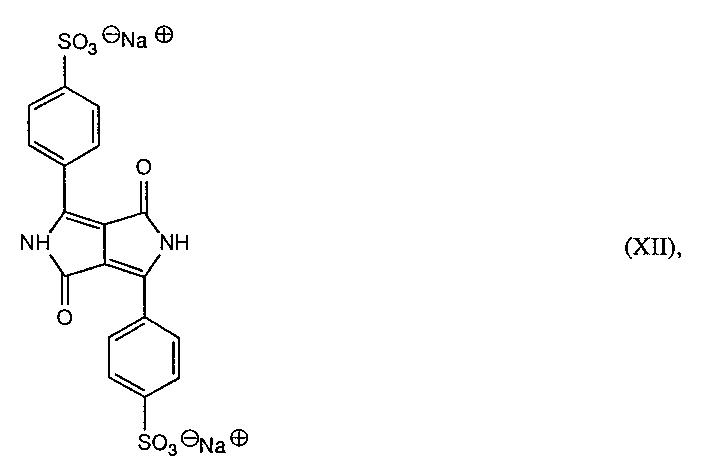
hergestellt gemäss Beispiel 4 von US-Patent 4 791 204, in 250 Teilen Wasser eingetragen, 3 Stunden auf 60°C erhitzt und dann auf Raumtemperatur abgekühlt. Der Rückstand wird abfiltriert mit Wasser gewaschen und getrocknet.

Das erhaltene Pigmentsalz wird wie in Beispiel 1 beschrieben in einen Alkyd-Melamin-Einbrennlack eingearbeitet.

Die erhaltene Ausfärbung zeigt gegenüber einer Kontrollausfärbung, bei der anstelle des erfindungsgemässen Pigmentsalzes ein Pigment der Formel 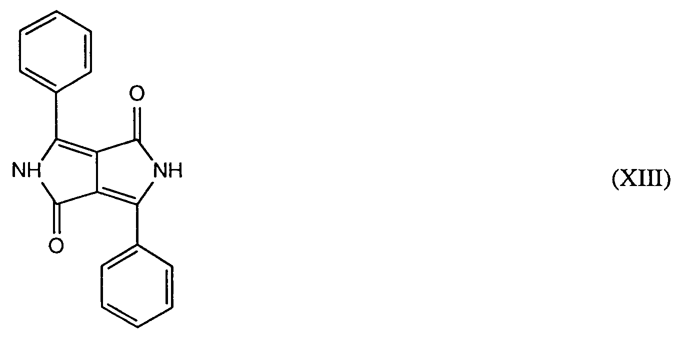
eingesetzt wurde, eine überraschend bessere Wetterbeständigkeit.

### Beispiel 7:

0,7 g Pigmentsalz gemäss Beispiel 6 werden mit 700 g Polyethylen VESTOLEN A 6016® (Hüls) und 1,4 g Calciumcarbonat MILICARB® trocken vermischt. Die Mischung wird anschliessend in einem Einschneckenextruder zweimal bei 200°C extrudiert. Das so erhaltene Granulat wird auf einer Spritzgussmaschine bei 200°C zu Plättchen verarbeitet. Die Wetterbeständigkeit wird durch Bewitterung der Plättchen, wie für die Lackausfärbungen in Beispiel 1 beschrieben, bestimmt. Man kann eine bessere Wetterbeständigkeit als bei entsprechend mit einem Pigment der Formel XIII hergestellten Kontroll-Plättchen feststellen.

### Beispiel 8:

0,5 g Pigmentsalz gemäss Beispiel 6 und 16,2 g einer Nitrocellulosedruckfarbe bestehend aus 11 g Nitrocellulose A 250, 9 g DOWANOL PM® (Dow Chem.), 20 g Essigsäureethylester und 60 g Ethanol werden nach üblichen Methoden vermischt. Die erhaltene Druckfarbe wird auf Papier ausgezogen. Die Wetterbeständigkeit wird durch Belichtung der Ausfärbungen gemäss Fadeometer-Test während 500 Stunden bestimmt. Man kann eine bessere Wetterbeständigkeit als bei entsprechend mit einem Pigment der Formel XIII hergestellten Kontroll-Ausfärbungen feststellen.

## Patentansprüche

1. Pigmentsalze aus
a) einem mindestens eine saure Gruppe -SO₃H, -COOH oder -PO(OH)₂ enthaltenden organischen Farbstoff ausgewählt aus der Gruppe bestehend aus Azofarbstoffe, Chinacridone, Diketopyrrolopyrrole, Phthalocyanine, Indanthrone, Flavanthrone, Pyranthrone, Anthrachinone, Perylene, Dioxazine, Perinone, Thioindigo, Isoindoline und Isoindolinone und
b) einer Nitroxylverbindung bestehend aus mindestens einem unsubstituierten oder substituierten 5-, 6- oder 7-gliedrigen Heterocyclus enthaltend eine zweiwertige Gruppe der Formel 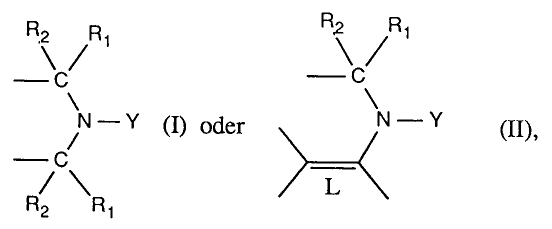
worin,
R₁ und R₂ unabhängig voneinander Methyl, Ethyl oder Phenyl bedeuten oder zusammen einen 4-12 gliedrigen aliphatischen Ring bilden,
L einen aromatischen Rest darstellt
und Y O·, OH oder OR bedeutet, worin R C₅-C₆-Cyclohexyl oder C₄-C₁₀-Alkyl ist, wobei die Salzbildung zwischen den sauren Gruppen des Farbstoffs und den Nitroxylgruppen erfolgt.

2. Pigmentsalze gemäss Anspruch 1, dadurch gekennzeichnet, dass sie als Komponente a) einen sauren Farbstoff der Isoindolin-, Isoindolinon-, Bisazo- und insbesondere der Monoazo-, Diketopyrrolopyrrol-, Chinacridon-, Phthalocyanin-, Anthrachinon- und Perylenreihe enthalten.

3. Pigmentsalze gemäss Anspruch 1, dadurch gekennzeichnet, dass sie als Komponente a) einen Farbstoff der Formel 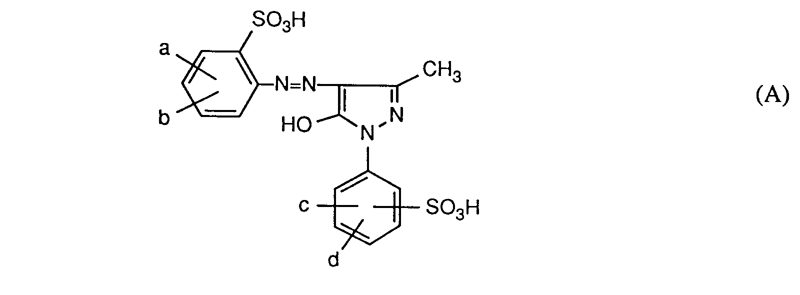 oder der Formel 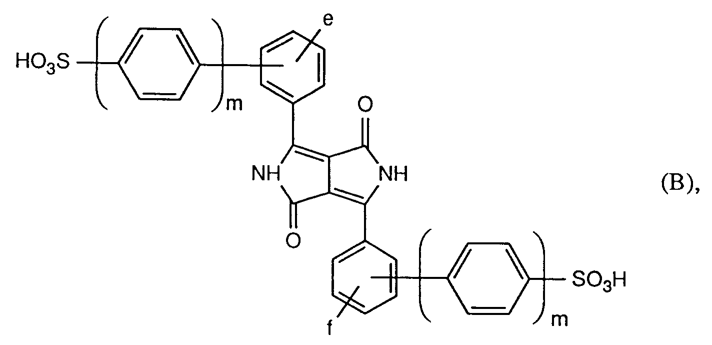 enthalten, worin a und b unabhängig voneinander Cl, Br, CH₃ oder OCH₃, c und d unabhängig voneinander H, Cl, Br, CH₃ oder OCH₃, e und f unabhängig voneinander H, Cl, CH₃ oder CN und m Null oder 1 bedeuten.

4. Pigmentsalze gemäss Anspruch 1, dadurch gekennzeichnet, dass die Nitroxylverbindung in der Menge vorhanden ist, dass die basischen Nitroxylgruppen die sauren Gruppen des Farbstoffs neutralisieren.

5. Pigmentsalze gemäss Anspruch 1, dadurch gekennzeichnet, dass sie als Komponente b) eine Nitroxylverbindung enthaltend mindestens eine Gruppe der Formel I oder II, worin R₁ und R₂ Methyl bedeuten, enthalten.

6. Pigmentsalze gemäss Anspruch 1, dadurch gekennzeichnet, dass sie als Komponente b) eine Nitroxylverbindung der Formel 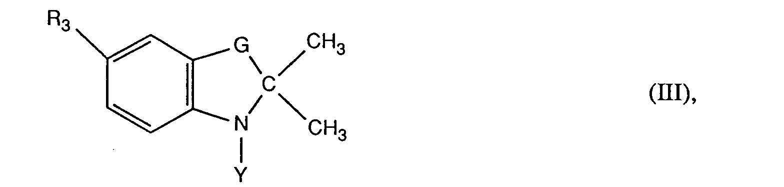 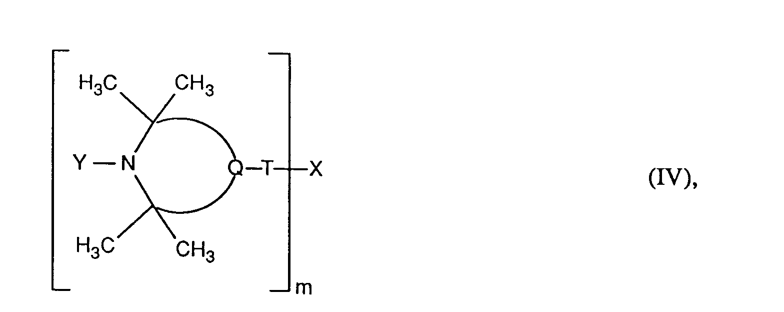 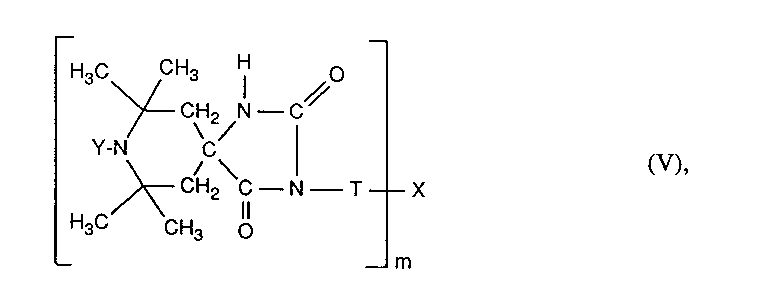 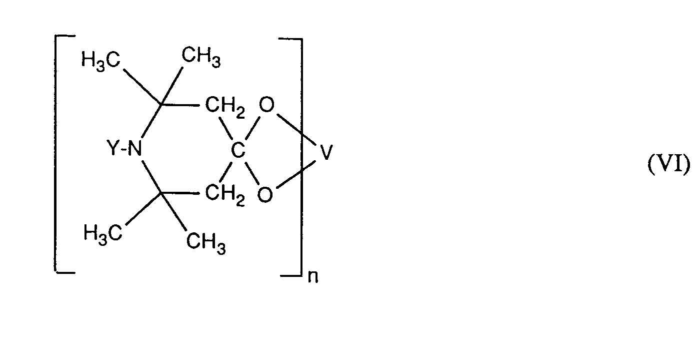 oder 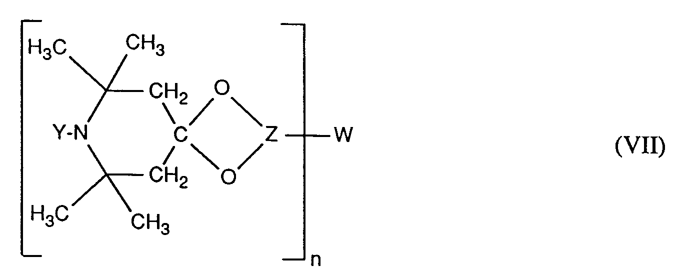 enhalten, worin
R₃ C₁-C₁₈-Alkyl oder C₁-C₁₈-Alkoxy ist,
G eine zweiwertige Gruppe der Formel -CR₄=CH- oder -CHR₄-CH₂- bedeutet und
R₄ C₁-C₁₈-Alkyl ist,
Q eine Gruppe der Formel 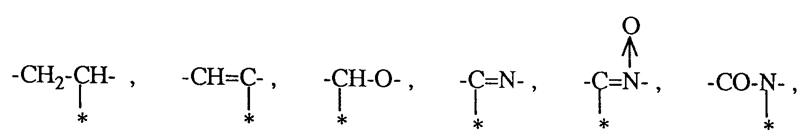 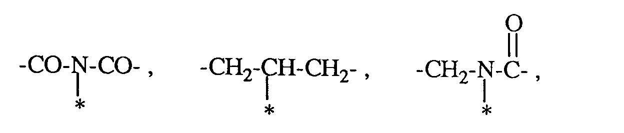 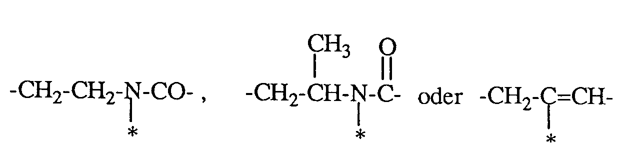 darstellt, worin die mit * bezeichnete Bindung die zu T führende Bindung bedeutet, T eine direkte Bindung oder eine Gruppe der Formel 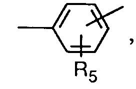 worin R₅ Wasserstoff, Halogen oder C₁-C₄-Alkyl bedeutet, oder -(CH₂)ᵣ-, worin r 1 oder 2 ist, bedeutet,
m die Zahl 1, 2, 3, 4 oder 6 ist,
X, bei m = 1, Wasserstoff, C₁-C₁₈-Alkyl, unsubstituiertes oder durch C₁-C₄-Alkyl, C₁-C₄-Alkoxy, Phenyl oder Halogen substituiertes Phenyl oder, unter der Bedingung, dass T, wenn an ein N-Atom gebunden, keine direkte Bindung bedeutet, eine Gruppe der Formel -OCO-NR₆R₇, -OSO₂-NR₆R₇, -OCO-R₇, -COOR₇, -CONR₆R₇, -NR₆-COR₇, -NR₆-CONR₆R₇, -OR₇, NR₆R₇ oder 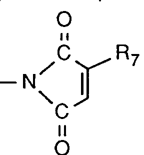 oder 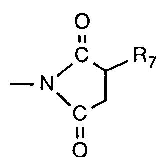 ist, worin R₆ Wasserstoff oder C₁-C₁₈-Alkyl bedeutet, R₇ C₁-C₁₈-Alkyl, C₂-C₁₂-Alkenyl, C₅-C₁₂-Cycloalkyl, unsubstituiertes oder durch C₁-C₄-Alkyl, C₁-C₄-Alkoxy, Halogen, Phenyl oder Nitro substituiertes Phenyl oder Naphthyl oder eine Gruppe -(CH₂)ₛ-CHR₈R₉ ist, s Null, 1, 2 oder 3, R₈ Wasserstoff, Methyl oder Phenyl und R₉ -OH, Halogen, eine Gruppe -COOCH₃ oder -COOC₂H₅ bedeuten,
bei m = 2, eine Gruppe der Formel
-(CH₂ 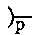 oder, unter der Bedingung, dass T, wenn an ein N-Atom gebunden, keine direkte Bindung bedeutet, eine Gruppe der Formel -O-(CH₂)ₚ-O-, -NR₆-(CH₂)ₚ-NR₆-, -OCO-F-COO-, -NR₆-CO-F-CO-NR₆-, -OCO-NH-F-NH-COO- oder -NR₆-CONH-F-NHCO-NR₆- ist, worin F -(CH₂)ₚ-, 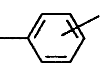 oder 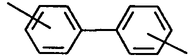 darstellt,
und p eine Zahl zwischen 2 und 10 bedeutet,
bei m = 3, eine Gruppe 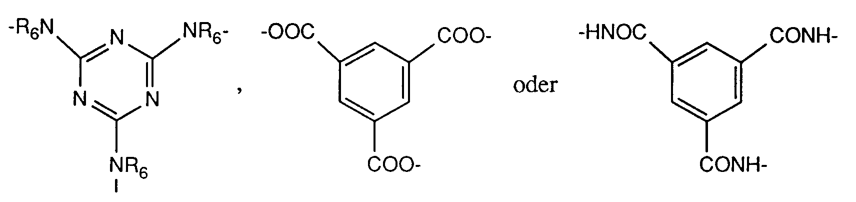 bei m = 4, eine Gruppe 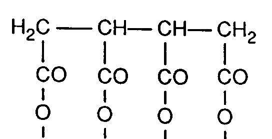 und
bei m = 6, eine Gruppe 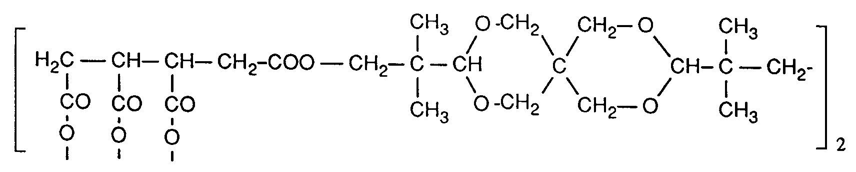 bedeutet,
n die Zahl 1 oder 2 ist,
V, bei n = 1, C₂-C₈-Alkylen oder Hydroxyalkylen oder C₄-C₂₂-Acyloxyalkylen, und bei n = 2 die Gruppe (-CH₂)₂C(CH₂-)₂ oder 〉C〈 bedeutet, und
Z eine Gruppe der Formel 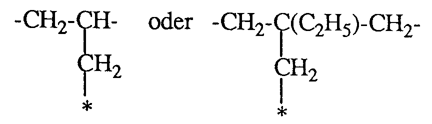
ist, worin die mit * bezeichnete Bindung die zu W führende Bindung darstellt,
W, bei n = 1, eine Gruppe -OCOR₁₀ bedeutet, worin R₁₀ C₁-C₁₈-Alkyl, unsubstituiertes oder durch C₁-C₄-Alkyl, C₁-C₄-Alkoxy oder Halogen substituiertes Phenyl oder Naphthyl ist,
bei n = 2, eine Gruppe der Formel -OCO-(CH₂)ₚ-COO- oder 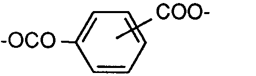 ist, und
Y O·, OH oder OR, worin R die in Anspruch 1 angegebene Bedeutung hat, bedeutet.

7. Pigmentsalze gemäss Anspruch 1, dadurch gekennzeichnet, dass sie als Komponente b) eine Nitroxylverbindung der Formel IV, V oder VI mit der in Anspruch 6 angegebenen Bedeutung enthalten.

8. Pigmentsalze gemäss Anspruch 1, dadurch gekennzeichnet, dass sie als Komponente b) eine Nitroxylverbindung der Formel 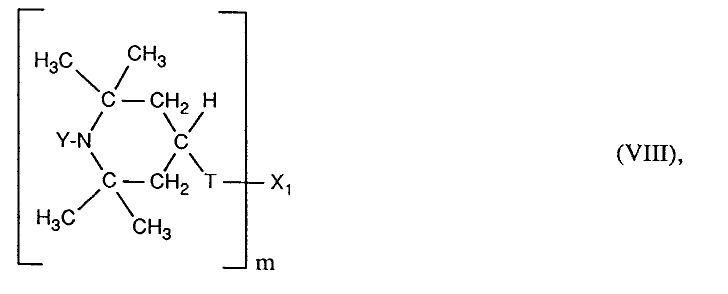 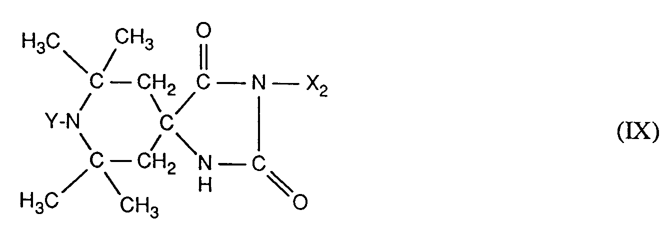 oder 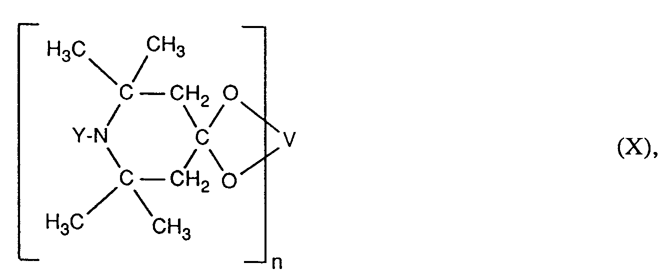 enthalten, worin
T eine direkte Bindung bedeutet,
m 1, 2 oder 3 ist,
X₁, bei m = 1, C₁-C₁₈-Alkyl, -OCO-R₇, -NR₆-COR₇ oder 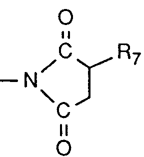 ist, worin R₆ Wasserstoff oder C₁-C₁₈-Alkyl ist und R₇ C₁-C₁₈-Alkyl oder unsubstituiertes oder durch C₁-C₄-Alkyl, C₁-C₄-Alkoxy, Phenyl oder Halogen substituiertes Phenyl oder Naphthyl bedeutet,
bei m = 2, eine Gruppe -OCO-(CH₂)ₚ-OCO- oder -NR₆CO-(CH₂)ₚ-CONR₁₅-, worin p eine Zahl zwischen 2 und 8 ist, 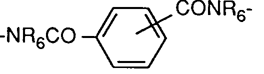 oder 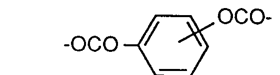 ist und
bei m = 3, eine Gruppe 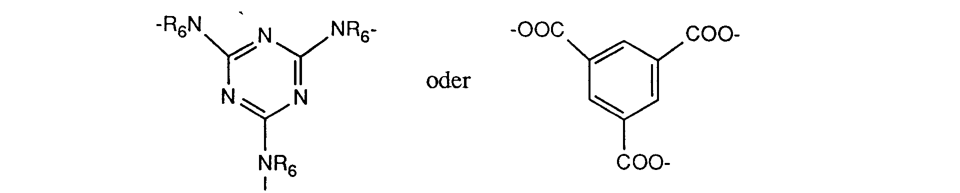 bedeutet,
X₂ C₁-C₁₈-Alkyl ist,
n die Zahl 2,
V die Gruppe (-CH₂)₂C(CH₂-)₂ oder 〉C〈 bedeutet und
Y OH oder OC₈H₁₇ ist.

9. Pigmetsalze gemäss Anspruch 8, dadurch gekennzeichnet, dass sie als Komponente b) eine Nitroxylverbindung der Formel VIII enthalten, worin T eine direkte Bindung bedeutet, m 2 ist und X₁ eine Gruppe 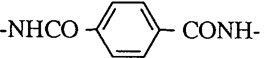 oder 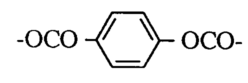 bedeutet.

10. Hochmolekulares organisches Material enthaltend ein Pigmentsalz gemäss Anspruch 1.
